(19) Europäisches Patentamt
European Patent Office
Office européen des brevets

(11) Veröffentlichungsnummer: **0 036 485**
**B1**

(12) **EUROPÄISCHE PATENTSCHRIFT**

(45) Veröffentlichungstag der Patentschrift: **06.04.83**

(51) Int. Cl.³: **C 07 F 9/17,** C 07 F 9/18

(21) Anmeldenummer: **81101094.1**

(22) Anmeldetag: **17.02.81**

(54) **Verfahren zur Umsetzung von Alkoholen und/oder Phenolen mit Phosphorpentasulfid.**

(30) Priorität: **22.03.80 DE 3011085**

(43) Veröffentlichungstag der Anmeldung: **30.09.81 Patentblatt 81/39**

(45) Bekanntmachung des Hinweises auf die Patenterteilung: **06.04.83 Patentblatt 83/14**

(84) Benannte Vertragsstaaten: **BE CH DE FR GB IT LI NL**

(56) Entgegenhaltungen:
**DE-A-2 328 721**
**DE-A-2 421 462**
**GB-A-1 228 528**
**GB-A-1 558 956**

(73) Patentinhaber: **HOECHST AKTIENGESELLSCHAFT, Postfach 80 03 20, D-6230 Frankfurt/Main 80 (DE)**

(72) Erfinder: **Krause, Werner, Dr., Alleestrasse 42, D-5030 Hürth (DE)**
Erfinder: **Grosse, Jürgen, Dr., Am Grünen Weg 5, D-5030 Hürth (DE)**
Erfinder: **Klose, Werner, Dr., Grachtstrasse 14, D-5042 Erfstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 036 485 B1

Verfahren zur Umsetzung von Alkoholen und/oder Phenolen mit Phosphorpentasulfid.

Die Erfindung betrifft ein Verfahren zur Umsetzung von Alkoholen und/oder Phenolen mit Phosphorpentasulfid in Gegenwart von Katalysatoren. Die dabei entstehenden 0,0-Dialkyl- bzw. 0,0-Diaryl-, oder 0-Alkyl-0-aryldithiophosphorsäuren werden in grossem Umfang als Zwischenprodukte, vor allem für die Herstellung von Insektiziden, Öl-Additiven und Flotationssammlern eingesetzt.

Die Umsetzung von Alkoholen oder Phenolen mit Phosphorpentasulfid verläuft überwiegend nach folgender Gleichung:

$$P_4S_{10} + 8\,ROH \rightarrow 4\,(RO)_2\,P(S)SH + 2H_2S$$

Die auf diese Weise hergestellten sogenannten Rohsäuren weisen jedoch nur Gehalte von etwa 80 bis 90% auf. Als Nebenprodukte entstehen bei der Reaktion in mehr oder weniger grossen Mengen:

$(RO)_2P(S)SR$, $(RO)_3PS$, $RO_2P(S)H$, $(RO)_2P(S)OH$, $(RO)_2P(S)SP(S)(OR)_2$, $(RO)_2P(S)SSP(S)(OR)_2$ und elementarer Schwefel.

Die Nebenprodukte machen zusammen etwa 10 bis 20% aus, so dass es in der Regel notwendig ist, diese unerwünschten Nebenbestandteile durch einen Reinigungsschritt abzutrennen.

Für die Reinigung stehen im wesentlichen zwei Verfahren zur Verfügung: die Vakuumdestillation der Rohsäure sowie die Ausfällung als Salz und nachfolgender Freisetzung der Dithiosäure durch eine starke Mineralsäure (DE-PS 24 21 462).

Die Destillation ist technisch nur für die Umsetzungsprodukte des Phosphorpentasulfids mit kurzkettigen Alkoholen (Methanol, Ethanol, n-Propanol, iso-Propanol) geeignet. Wie Untersuchungen mit Hilfe der Differentialthermoanalyse zeigen, ist die thermische Belastbarkeit der 0,0-Dialkyldithiophosphorsäuren nur gering. Bei einigen Derivaten kommt es schon bei Temperaturen um 100°C zu Zersetzungsreaktionen, die in ungünstigen Fällen auch zu einer spontanen Zersetzung des gesamten Reaktionsgemisches führen können. Aus diesem Grund ist eine Destillation wegen des relativ niedrigen Siedepunktes nur bei den niederen Gliedern, und zwar von der 0,0-Dimethyl- bis zur 0,0-Dipropyldithiophosphorsäure sinnvoll durchführbar, doch liegen die Ausbeuten selbst dann nur bei 80–85%. Darüber hinaus entstehen übelriechende schwer zu handhabende und aus Gründen des Umweltschutzes aufwendig und kostspielig zu vernichtende Destillationsrückstände.

Bei dem Verfahren nach DE-PS 24 21 462 wird zunächst durch Umsetzung der Rohsäure mit Ammoniak das Ammoniumsalz hergestellt, das von den Verunreinigungen abfiltriert und anschliessend mit Mineralsäuren zur reinen 0,0-Dialkyl- bzw. 0,0-Diaryldithiosphophorsäure umgesetzt wird. Dieses Verfahren ist technisch recht kompliziert und erfordert vor allem einen hohen Chemikalien-, Apparate- und Personalaufwand. Sowohl für das Destillations- als auch für das Salzreinigungsverfahren sind hohe Investitionskosten erforderlich.

Längerkettige 0,0-Dialkyldithiophosphorsäuren sowie 0,0-Diaryldithiophosphorsäuren lassen sich technisch weder durch Destillation noch über das Salzverfahren reinigen, so dass solche Säuren bisher nur in ungenügender Reinheit zur Verfügung standen.

Durch Umsetzung von Phosphorpentasulfid mit Alkohol- und/oder Phenolgemischen lassen sich prinzipiell auch Dithiophosphorsäurediester mit unterschiedlichen Estergruppen herstellen. Insbesondere 0-Alkyl-0-aryldithiophosphorsäureester sind als Zwischenprodukte für Schmiermitteladditive interessant. Wegen der geringen Reaktivität der Phenole im Vergleich zu den Alkoholen ist jedoch die Ausbeute an gemischtem Ester nach den bekannten Arbeitsweisen nur gering. Eine weitere Möglichkeit besteht auch in der Umsetzung von äquimolaren Mischungen von 0,0-Dialkyldithiophosphorsäuren und 0,0-Diaryldithiophosphorsäuren. Dies führt selbst nach relativ langen Reaktionszeiten jedoch nur zu Ausbeuten von 27 bis 29 Mol% and gemischtem Ester (GB-PS 1 558 956).

Es bestand nun die Aufgabe, das Verfahren zur Herstellung von Dithiophosphorsäuren so weit zu verbessern, dass auf weitere Reinigungsschritte verzichtet werden kann. Dies bedeutet die Herstellung von 0,0-Dialkyl-, 0-Alkyl-0-aryl- oder 0,0-Diaryldithiophosphorsäuren durch Alkoholyse und/oder Phenolyse von Phophorpentasulfid mit Ausbeuten von mehr als 90% insbesondere von mehr als 95%.

Diese Aufgabe wurde durch das Auffinden von neuen Katalysatoren gelöst, die nicht nur die Umsetzungsgeschwindigkeit zwischen Alkoholen bzw. Phenolen und Phosphorpentasulfid erhöhen, sondern auch die Ausbeuten an den Dithiophosphorsäuren erheblich steigern.

Erfindungsgemäss werden als solche Katalysatoren Phosphor- und Stickstoffverbindungen eingesetzt, die folgenden Verbindungsklassen zuzuordnen sind:

a) Phosphoniumsalze der allgemeinen Formel

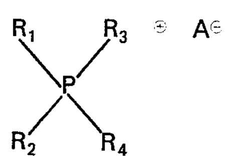

I

b) Ammoniumsalze der allgemeinen Formel

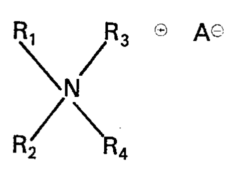

II

c) Phophinoxide der allgemeinen Formel

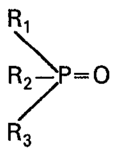

III

d) Phosphinsulfide der allgemeinen Formel

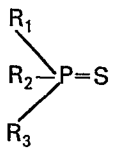

IV

e) Phosphinsäure bzw. deren Derivate der allgemeinen Formel

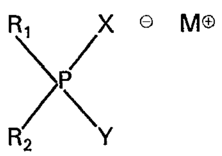

V

In den angegebenen Formeln I bis V bedeuten $R_1$, $R_2$, $R_3$ und $R_4$ gleiche oder verschiedene Alkyl-, Aryl-, Alkaryl- oder Aralkylreste mit 1 bis 22 Kohlenstoffatomen, vorzugsweise Alkylreste mit 1 bis 12 C-Atomen.

A stellt einen Rest einer anorganischen oder organischen Säure, wie beispielsweise einer Halogenwasserstoffsäure der Schwefelsäure, Salpetersäure, Essigsäure oder einer Dialkyldithiophosphorsäure dar, während X und Y sowohl für Sauerstoff als auch für Schwefel und M für ein einwertiges Metall oder Wasserstoff steht.

Der Katalysator kann in einer Menge von 0,001 bis 5 Gew% des eingesetzten Alkohols oder Phenols verwendet werden. Bevorzugt wird jedoch eine Menge zwischen 0,01 und 1%.

Die Zugabe des Katalysators kann dadurch erfolgen, dass dieser im jeweiligen Alkohol (Phenol) gelöst wird und dann über die Zugabe des Alkohols (Phenol) zum Phosphorpentasulfid kontinuierlich in die Reaktionsmischung gelangt. Es ist weiterhin möglich, den Katalysator in fester oder gelöster Form auf einmal oder in Portionen zur Phosphorpentasulfidaufschlämmung zu geben, oder aber, insbesondere bei Phenolen, die drei Komponenten Phosphorpentasulfid, Katalysator und Phenol direkt ohne Dosierung umzusetzen.

Die bisher bekannten Katalysatoren für die Alkoholyse oder Phenolyse von Phosphorpentasulfid verfolgen in erster Linie den Zweck, lediglich die Umsetzungsgeschwindigkeit der Reaktion zwischen Alkoholen bzw. Phenolen und Phosphorpentasulfid zu steigern (DE-AS 28 28 721, GB-PS 1 228 528).

Die Qualität der entstehenden Rohsäure bzw. die Säureausbeute wird jedoch – wie die nachfolgenden Versuche mit solchen Katalysatoren zeigen – zum Teil sogar verschlechtert.

Demgegenüber bewirken die neu gefundenen Katalysatoren nicht nur eine Steigerung der Reaktionsgeschwindigkeit, sondern vor allem eine deutliche Erhöhung der Säureausbeute. Dies gilt insbesondere auch für die Herstellung von gemischten Alkyl-, Aryl- und Alkyl-Arylestern. Die Erhöhung der Säureausbeute beträgt z.T. mehr als 10%, so dass nunmehr Rohsäurequalitäten von über 90%, insbesondere von über 95%, erreicht werden können, die es erlauben, in den meisten Fällen auf weitere Reinigungsschritte zu verzichten. Dies bedeutet eine wesentliche Steigerung der Wirtschaftlichkeit des Verfahrens zur Alkoholyse bzw. Phenolyse von Phosphorpentasulfid. Ein weiterer Vorteil ist die äusserst geringe Katalysatormenge, die für eine optimale katalytische Aktivität notwendig ist.

Die nachfolgenden Beispiele zeigen, dass die Phosphorpentasulfid-Rückstandmenge bei Einsatz der erfindungsgemässen Katalysatoren wesentlich geringer ist als bei Vergleichsansätzen ohne oder mit bekannten Katalysatoren.

Die Alkoholyse bzw. Phenolyse von Phosphorpentasulfid verläuft somit durch die erfindungsgemässen Katalysatoren nicht nur schneller, sondern auch vollständiger, wodurch gleichzeitig die Anlagenkapazität wesentlich erhöht wird. Dies wird weiterhin durch folgenden Reaktivitätstest dokumentiert:

Zur Messung der Reaktivität von Phosphorpentasulfid werden 50 g $P_2S_5$ in 125 g 2-Ethylhexanol unter Rühren in einem Dewargefäss umgesetzt. Die Ausgangstemperatur beträgt 30°C. Nach 1 h wird eine Temperaturerhöhung von 26°C festgestellt.

26°C/h ist eine Temperaturerhöhung, wie sie für Phosphorpentasulfidsorten von mittlerer bis hoher Reaktivität typisch ist. Wiederholt man den Versuch, unter Zusatz von 0,06% Tetrabutylphosphoniumbromid (bezogen auf 2-Ethylhexanol), so erhält man eine Temperaturerhöhung von 46°C. Dies ist ein Wert, der nur von Phosphorpentasulfidsorten mit höchster Reaktivität erreicht wird. Durch den Zusatz von äusserst geringen Katalysatormengen lässt sich somit die Reaktivität von Phosphorpentasulfid ganz wesentlich steigern.

Des weiteren wird durch die folgenden Beispiele gezeigt, dass durch die erfindungsgemässen Katalysatoren Rohsäuren von ausserordentlich hoher Reinheit und Ausbeute erhalten werden. Reinheit und Ausbeute liegen in allen Fällen über 90%, meist über 95%. Damit sind erstmalig auch längerkettige 0,0-Dialkyldithiophosphorsäuren von hoher Reinheit in technischem Massstab verfügbar, da deren Reinigung durch Destillation bzw. über das Salzverfahren technisch nicht möglich ist.

Beispiel 1 (ohne Katalysator)

In einem mit Rührer, Tropftrichter, Rückflusskühler, Thermometer und Gaseinleitungsrohr versehenen 1-l-Glaskolben werden 444 g Phosphorpentasulfid in 140 ml Toluol aufgeschlämmt und innerhalb von 2 h mit 256 g $CH_3OH$ unter kräftigem Rühren bei 70°C umgesetzt. Der entstehende Schwefelwasserstoff wird in Natronlauge

absorbiert. Zur Nachreaktion wird die Reaktionslösung weitere 30 Minuten bei 70°C gehalten. Danach wird auf Raumtemperatur abgekühlt und 1 h lang mit einem Stickstoffstrom restlicher Schwefelwasserstoff aus der Rohsäure entfernt. Nicht umgesetztes Phosphorpentasulfid wird abfiltriert.

Man erhält 721 g toluolhaltige 0,0-Dimethyldithiophosphorsäure mit einem Gehalt von 74,9%. Die Ausbeute an 0,0-Dimethyldithiophosphorsäure beträgt 86,8%, bezogen auf das umgesetzte Phosphorpentasulfid.

Phosphorpentasulfid-Rückstand: 7,3 g (1,6%).

Beispiel 1a (erfindungsgemäss)

Man verfährt wie in Beispiel 1, jedoch wird im Methanol vor der Umsetzung 0,13 g $(CH_3)_4PCl$ gelöst. Man erhält 739 g toluolhaltige Rohsäure mit einem Gehalt von 81,3%. Die Ausbeute an 0,0-Dimethyldithiophosphorsäure beträgt 95,1%, bezogen auf das umgesetzte Phosphorpentasulfid.

Phosphorpentasulfid-Rückstand: 0,5 g (0,1%).
Ausbeutesteigerung gegenüber Beispiel 1: 8,3%.

Beispiel 1b (erfindungsgemäss)

Man verfährt wie in Beispiel 1, jedoch wird im Methanol vor der Umsetzung 0,38 g Trioctylphosphinoxid gelöst. Man erhält 739 g toluolhaltige Rohsäure mit einem Gehalt von 80,0%. Die Ausbeute an 0,0-Dimethyldithiophosphorsäure beträgt 93,7%, bezogen auf das umgesetzte Phosphorpentasulfid.

Phosphorpentasulfid-Rückstand: 1,4 g (0,3%).
Ausbeutesteigerung gebenüber Beispiel 1: 6,9%.

Beispiel 1c (erfindungsgemäss)

Man verfährt wie in Beispiel 1, jedoch wird im Methanol vor der Umsetzung 0,74 g Tetrabutylammoniumiodid gelöst. Man erhält 741 g toluolhaltige Rohsäure mit einem Gehalt von 81,1%. Die Ausbeute an 0,0-Dimethyldithiophosphorsäure beträgt 95,2%, bezogen auf das umgesetzte Phosphorpentasulfid.

Phosphorpentasulfid-Rückstand: 0,9 g (0,2%).
Ausbeutesteigerung gegenüber Beispiel 1: 8,4%.

Beispiel 2 (ohne Katalysator)

444 g Phosphorpentasulfid werden in 170 g 0,0-Dimethyldithiophosphorsäure (96,0%) aufgeschlämmt und innerhalb von 2 h mit 256 g $CH_3OH$ bei 60°C umgesetzt. Zur Nachreaktion wird die Reaktionslösung weitere 30 Minuten bei 60°C gehalten. Danach wird auf Raumtemperatur abgekühlt, mit einem Stickstoffstrom restliches $H_2S$ ausgeblasen und filtriert. Man erhält 776 g Rohsäure mit einem Gehalt von 86,7%. Die Ausbeute an 0,0-Dimethyldithiophosphorsäure beträgt 82,7%, bezogen auf das umgesetzte Phosphorpentasulfid.

Phosphorpentasulfid-Rückstand: 12,1 g (2,7%).

Beispiel 2a (erfindungsgemäss)

Man verfährt wie in Beispiel 2, jedoch wird im Methanol vor der Umsetzung 0,68 g Tetrabutylphosphoniumbromid gelöst. Man erhält 799 g Rohsäure mit einem Gehalt von 96,0%. Die Ausbeute an 0,0-Dimethyldithiophosphorsäure beträgt 95,4%, bezogen auf das umgesetzte Phosphorpentasulfid.

Phosphorpentasulfid-Rückstand: 1,2 g (0,3%).
Ausbeutesteigerung gegenüber Beispiel 2: 12,6%.

Beispiel 2b (erfindungsgemäss)

Man verfährt wie in Beispiel 2, jedoch wird im Methanol vor der Umsetzung 1,6 g Trimethylphosphinsulfid gelöst. Man erhält 784 g Rohsäure mit einem Gehalt von 92,8%. Die Ausbeute an 0,0-Dimethyldithiophosphorsäure beträgt 90,5%, bezogen auf das umgesetzte Phosphorpentasulfid.

Phosphorpentasulfid-Rückstand: 6,2 g (1,4%).
Ausbeutesteigerung gegenüber Beispiel 2: 7,7%.

Beispiel 2c (erfindungsgemäss)

Man verfährt wie in Beispiel 2, jedoch wird vor der Umsetzung im Methanol 1,6 g Natrium-dimethyldithiophosphinat gelöst. Man erhält 786 g Rohsäure mit einem Gehalt von 93,4%. Die Ausbeute an 0,0-Dimethyldithiophosphorsäure beträgt 90,8%, bezogen auf das umgesetzte Phosphorpentasulfid.

Phosphorpentasulfid-Rückstand: 2,7 g (0,6%).
Ausbeutesteigerung gegenüber Beispiel 2: 8,0%.

Beispiel 2d (erfindungsgemäss)

Man verfährt wie im Beispiel 2, jedoch wird vor der Umsetzung im Methanol 1,6 g Tetramethylammoniumchlorid gelöst. Man erhält 804 g Rohsäure mit einem Gehalt von 95,1%. Die Ausbeute an 0,0-Dimethyldithiophosphorsäure beträgt 95,2%, bezogen auf das umgesetzte Phosphorpentasulfid.

Phosphorpentasulfid-Rückstand: 0,5 g (0,1%).
Ausbeutesteigerung gegenüber Beispiel 2: 12,4%.

Beispiel 3 (ohne Katalysator)

111 g Phosphorpentasulfid werden in 40 g 0,0-Diethyldithiophosphorsäure (85,3%) aufgeschlämmt und innerhalb von 2 h mit 92 g Ethanol bei 70°C umgesetzt. Zur Nachreaktion wird die Reaktionslösung 30 Minuten bei 70°C gehalten. Danach wird auf Raumtemperatur abgekühlt, mit einem Stickstoffstrom restliches $H_2S$ ausgeblasen und filtriert. Man erhält 213 g Rohsäure mit einem Gehalt von 87,4%. Die Ausbeute an 0,0-Diethyldithiophosphorsäure beträgt 84,9%, bezogen auf das umgesetzte Phosphorpentasulfid.

Phosphorpentasulfid-Rückstand: 4,2 g (3,8%).

Beispiel 3a (erfindungsgemäss)

Man verfährt wie in Beispiel 3, jedoch wird vor der Umsetzung im Ethanol 0,22 g Trimethyldodecylphosphoniumbromid gelöst. Man erhält 223 g Rohsäure mit einem Gehalt von 94,3%. Die Ausbeute an 0,0-Diethyldithiophosphorsäure beträgt 94,9%, bezogen auf das umgesetzte Phosphorpentasulfid.

Phosphorpentasulfid-Rückstand: 0,4 g (0,4%).
Ausbeutesteigerung gegenüber Beispiel 3: 10,0%.

Beispiel 4 (ohne Katalysator)

222 g Phosphorpentasulfid werden in 70 g 0,0-Diisopropyldithiophosphorsäure (92,6%) aufgeschlämmt und unter Rühren innerhalb von 2 h mit 240 g Isopropanol bei 75°C umgesetzt. Nach 1 h Nachreaktion bei 75°C wird auf Raumtemperatur abgekühlt, mit einem Stickstoffstrom restliches $H_2S$ ausgeblasen und filtriert. Man erhält 481 g Rohsäure mit einem Gehalt von 88,3%. Die Ausbeute an 0,0-Diisopropyldithiophosphorsäure beträgt 87,8%, bezogen auf das umgesetzte Phosphorpentasulfid.

Phosphorpentasulfid-Rückstand: 9,5 g (4,3%).

Beispiel 4a (erfindungsgemäss)

Man verfährt wie in Beispiel 4, jedoch wird vor der Umsetzung im Isopropanol 0,5 g Trimethylphosphinoxid gelöst. Man erhält 504 g Rohsäure mit einem Gehalt von 94,9%. Die Ausbeute an 0,0-Diisopropyldithiophosphorsäure beträgt 96,6%, bezogen auf das umgesetzte Phosphorpentasulfid.

Phosphorpentasulfid-Rückstand: 0,4 g (0,2%).
Ausbeutesteigerung gegenüber Beispiel 4: 8,3%.

Beispiel 4b (erfindungsgemäss)

Man verfährt wie in Beispiel 4, jedoch wird vor der Umsetzung im Isopropanol 0,34 g Tetrabutylphosphoniumbromid gelöst.

Man erhält 504 g Rohsäure mit einem Gehalt von 96,7%. Die Ausbeute an 0,0-Diisopropyldithiophosphorsäure beträgt 98,7%, bezogen auf das umgesetzte Phosphorpentasulfid.

Phosphorpentasulfid-Rückstand: 0,1 g (0,05%).
Ausbeutesteigerung gegenüber Beispiel 4: 10,9%.

Beispiel 5 (ohne Katalysator)

Zu einer Aufschlämmung von 666 g Phosphorpentasulfid in 208 g 0,0-Diisobutyldithiophosphorsäure (87,0%) werden unter Rühren bei 80°C innerhalb von 2 h 888 g iso-Butanol gegeben. Nach 10 Minuten Nachreaktionszeit wird auf Raumtemperatur abgekühlt, mit einem Stickstoffstrom restliches $H_2S$ ausgeblasen und filtriert. Man erhält 1625 g Rohsäure mit einem Gehalt von 84,8%. Die Ausbeute an 0,0-Diisobutyldithiophosphorsäure beträgt 86,4%, bezogen auf das umgesetzte Phosphorpentasulfid.

Phosphorpentasulfid-Rückstand: 31,8 g (4,8%).

Beispiel 5a (erfindungsgemäss)

Man verfährt wie in Beispiel 5, jedoch wird vor der Umsetzung im iso-Butanol 1,0 g Tetrabutylphosphoniumbromid gelöst. Man erhält 1661 g Rohsäure mit einem Gehalt von 96,0%. Die Ausbeute an 0,0-Diisobutyldithiophosphorsäure beträgt 97,5%, bezogen auf das umgesetzte Phosphorpentasulfid.

Phosphorpentasulfid-Rückstand: 1,3 g (0,2%).
Ausbeutesteigerung gegenüber Beispiel 5: 11,1%.

Beispiel 6 (ohne Katalysator)

Zu einer Aufschlämmung von 444 g Phosphorpentasulfid in 131 g 0,0-Di-2-ethylhexyldithiophosphorsäure (92,1%) werden unter Rühren innerhalb von 2 h bei 80°C 1040 g 2-Ethylhexanol gegeben. Nach 30 Minuten Nachreaktionszeit wird auf Raumtemperatur abgekühlt, mit einem Stickstoffstrom restliches $H_2S$ ausgeblasen und filtriert. Man erhält 1420 g Rohsäure mit einem Gehalt von 79,7%. Die Ausbeute an 0,0-Di-2-ethylhexyldithiophosphorsäure beträgt 87,1%, bezogen auf das umgesetzte Phosphorpentasulfid.

Phosphorpentasulfid-Rückstand: 80,8 g (18,2%).

Beispiel 6a (erfindungsgemäss)

Man verfährt wie in Beispiel 6, jedoch wird vor der Umsetzung in 2-Ethylhexanol 1,36 g Tetrabutylphosphoniumbromid gelöst. Man erhält 1540 g Rohsäure mit einem Gehalt von 95,7%. Die Ausbeute an 0,0-Di-2-ethyldithiophosphorsäure beträgt 95,7%.

Phosphorpentasulfid-Rückstand: 0,5 g (0,1%).
Ausbeutesteigerung gegenüber Beispiel 6: 8,6%.

Beispiel 7 (ohne Katalysator)

Zu einer Aufschlämmung von 222 g Phosphorpentasulfid in 80 g n-Octanol werden bei 80°C innerhalb von 2 h weitere 440 g n-Octanol gegeben. Zur Nachreaktion wird die Lösung 30 Minuten bei 80°C gehalten. Danach wird auf Raumtemperatur abgekühlt, mit einem Stickstoffstrom restliches $H_2S$ ausgetrieben und filtriert. Man erhält 672 g Rohsäure mit einem Gehalt von 81,6%. Die Ausbeute an 0,0-Di-n-octyldithiophosphorsäure beträgt 86,9%, bezogen auf das umgesetzte Phosphorpentasulfid.

Phosphorpentasulfid-Rückstand: 24,2 g (10,9%).

Beispiel 7a (erfindungsgemäss)

Man verfährt wie in Beispiel 7, jedoch wird vor der Umsetzung in n-Octanol 0,68 g Tetrabutylphosphoniumbromid gelöst.

Man erhält 706 g Rohsäure mit einem Gehalt von 97,8%. Die Ausbeute an 0,0-Di-n-octyldithiophosphorsäure beträgt 97,7%, bezogen auf das umgesetzte Phosphorpentasulfid.

Phosphorpentasulfid-Rückstand: 0,8 g (0,4%).
Ausbeutesteigerung gegenüber Beispiel 7: 10,8%.

Beispiel 8 (ohne Katalysator)

Zu einer Aufschlämmung von 55,5 g Phosphorpentasulfid in 33 g n-Dodecanol werden bei 80°C innerhalb von 2 h weitere 153 g Dodecanol gegeben. Um ein Erstarren des Alkohols zu vermeiden, wird ein beheizbarer Tropftrichter verwendet. Zur Nachreaktion wird die Lösung 30 Minuten bei 80°C gehalten. Danach wird auf Raumtemperatur abgekühlt, mit einem Stickstoffstrom restliches $H_2S$ ausgeblasen und filtriert. Man erhält 223 g Rohsäure mit einem Gehalt von 80,9%. Die Ausbeute an 0,0-Di-n-dodecyldithiophosphorsäure beträgt 88,8%, bezogen auf das umgesetzte Phosphorpentasulfid.

Phosphorpentasulfid-Rückstand: 7,2 g (13,0%).

Beispiel 8a (erfindungsgemäss)

Man verfährt wie in Beispiel 8, jedoch wird vor

der Umsetzung im n-Dodecanol 0,47 g Tetrabutylphosphoniumbromid gelöst. Man erhält 232 g Rohsäure mit einem Gehalt von 95,0%. Die Ausbeute an 0,0-Di-n-dodecyldithiophosphorsäure beträgt 95,1%, bezogen auf das umgesetzte Phosphorpentasulfid.

Phosphorpentasulfid-Rückstand: 0,4 g (0,7%).
Ausbeutesteigerung gegenüber Beispiel 8: 6,3%.

Beispiel 9 (ohne Katalysator)

Zu einer Aufschlämmung von 55,5 g Phosphorpentasulfid in 40 g n-Octadecanol werden bei 80°C innerhalb von 2 h weitere 230 g n-Octadecanol gegeben. Um ein Erstarren des Alkohols zu vermeiden, wird ein beheizbarer Tropftrichter verwendet. Zur Nachreaktion wird die Lösung 30 Minuten bei 80°C gehalten. Danach wird auf Raumtemperatur abgekühlt, mit einem Stickstoffstrom restliches $H_2S$ ausgeblasen und filtriert. Man erhält 306 g Rohsäure mit einem Gehalt von 78,8%. Die Ausbeute an 0,0-Di-n-octadecyldithiophosphorsäure beträgt 89,7%, bezogen auf das umgesetzte Phosphorpentasulfid.

Phosphorpentasulfid-Rückstand: 8,5 g (15,3%).

Beispiel 9a (erfindungsgemäss)

Man verfährt wie in Beispiel 9, jedoch wird vor der Umsetzung in n-Octadecanol 0,63 g Tetraoctylphosphoniumchlorid gelöst. Man erhält 314 g Rohsäure mit einem Gehalt von 94,4%. Die Ausbeute an 0,0-Di-n-octadecyldithiophosphorsäure beträgt 95,1%, bezogen auf das umgesetzte Phosphorpentasulfid.

Phosphorpentasulfid-Rückstand: 1,0 g (1,8%).
Ausbeutesteigerung gegenüber Beispiel 9: 5,4%.

Beispiel 10 (ohne Katalysator)

Zu 188 g Phenol werden unter Rühren bei 80 bis 85°C innerhalb von 10 Minuten 111 g Phosphorpentasulfid gegeben. Danach wird die Reaktionsmischung 50 Minuten lang auf 90°C erwärmt, heiss filtriert und bei 65°C mit einem Stickstoffstrom restliches $H_2S$ ausgeblasen. Man erhält 235 g Rohsäure mit einem Gehalt von 60,5%.

Die Ausbeute an 0,0-Diphenyldithiophosphorsäure beträgt 93,2%, bezogen auf das umgesetzte Phosphorpentasulfid.

Phosphorpentasulfid-Rückstand: 51 g (45,9%).

Beispiel 10a (erfindungsgemäss)

Man verfährt wie in Beispiel 10, jedoch wird zum Phenol vor der Umsetzung 0,42 g Ethyl-trioctylphosphoniumbromid gegeben. Man erhält 281 g Rohsäure mit einem Gehalt von 98,4%. Die Ausbeute an 0,0-Diphenyldithiophosphorsäure beträgt 98,0%, bezogen auf das umgesetzte Phosphorpentasulfid.

Phosphorpentasulfid-Rückstand: 0,02 g (0,02%).
Ausbeutesteigerung gegenüber Beispiel 10: 4,8%.

| Beispiel | Alkohol | Katalysator* | Aufschlämmung in | Gehalt | Penta-Rückst. | Ausbeute** |
|---|---|---|---|---|---|---|
| 1 | Methanol | - | Toluol | 74,9% | 1,6 % | 86,8% |
| 1a | Methanol | 0,05% $(CH_3)_4PCl$ | Toluol | 81,3% | 0,1 % | 95,1% |
| 1b | Methanol | 0,15% $(C_8H_{17})_3PO$ | Toluol | 80,0% | 0,3 % | 93,7% |
| 1c | Methanol | 0,29% $(C_4H_9)_4NI$ | Toluol | 81,1% | 0,2 % | 95,2% |
| 2 | Methanol | - | Rohsäure | 86,7% | 2,7 % | 82,8% |
| 2a | Methanol | 0,26% $(C_4H_9)_4PBr$ | Rohsäure | 96,0% | 0,3 % | 95,4% |
| 2b | Methanol | 0,62% $(CH_3)_3PS$ | Rohsäure | 92,8% | 1,4 % | 90,5% |
| 2c | Methanol | 0,62% 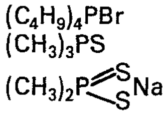 | Rohsäure | 93,4% | 0,6 % | 90,8% |
| 2d | Methanol | 0,62% $(CH_3)_4NCl$ | Rohsäure | 95,1% | 0,1 % | 95,2% |
| 3 | Ethanol | - | Rohsäure | 87,4% | 3,8 % | 84,9% |
| 3a | Ethanol | 0,24% $(CH_3)_3C_{12}H_{25}PBr$ | Rohsäure | 94,3% | 0,4 % | 94,9% |
| 4 | iso-Propanol | - | Rohsäure | 88,3% | 4,3 % | 87,8% |
| 4a | iso-Propanol | 0,21% $(CH_3)_3PO$ | Rohsäure | 94,9% | 0,2 % | 96,6% |
| 4b | iso-Propanol | 0,14% $(C_4H_9)_4PBr$ | Rohsäure | 96,7% | 0,05% | 98,7% |
| 5 | iso-Butanol | - | Rohsäure | 84,8% | 4,8 % | 86,4% |
| 5a | iso-Butanol | 0,11% $(C_4H_9)_4PBr$ | Rohsäure | 96,0% | 0,2 % | 97,5% |
| 6 | 2-Ethylhexanol | - | Rohsäure | 79,7% | 18,2 % | 87,1% |
| 6a | 2-Ethylhexanol | 0,13% $(C_4H_9)_4PBr$ | Rohsäure | 95,7% | 0,1 % | 95,7% |
| 7 | n-Octanol | - | n-Octanol | 81,6% | 10,9 % | 86,9% |
| 7a | n-Octanol | 0,13% $(C_4H_9)_4PBr$ | n-Octanol | 97,8% | 0,4 % | 97,7% |
| 8 | n-Dodecanol | - | n-Dodecanol | 80,9% | 13,0 % | 88,8% |
| 8a | n-Dodecanol | 0,25% $(C_4H_9)_4PBr$ | n-Dodecanol | 95,0% | 0,7 % | 95,1% |

| Beispiel | Alkohol | Katalysator* | Aufschlämmung in | Gehalt | Penta-Rückst. | Ausbeute** |
|---|---|---|---|---|---|---|
| 9 | n-Octadecanol | – | n-Octadecanol | 78,8% | 15,3 % | 89,7% |
| 9a | n-Octadecanol | 0,23% $(C_8H_{17})_4PCl$ | n-Octadecanol | 94,4% | 1,8 % | 95,1% |
| 10 | Phenol | – | Phenol | 60,5% | 45,9 % | 93,2% |
| 10a | Phenol | 0,22% $(C_2H_5)(C_8H_{17})_3PBr$ | Phenol | 98,4% | 0,02% | 98,0% |

* Gew%, bezogen auf den jeweiligen Alkohol.
** Bezogen auf das umgesetzte Phosphorpentasulfid.

Beispiel 11
(Vergleichsbeispiel mit Pyridin als Katalysator)

111 g Phosphorpentasulfid werden in 35 ml Toluol aufgeschlämmt und innerhalb von 2 h mit 64 g Methanol, welches 0,6 g Pyridin enthält, bei 60°C umgesetzt. Zur Nachreaktion wird die Lösung 30 Minuten bei 60°C gehalten. Danach wird abgekühlt, mit einem Stickstoffstrom restliches $H_2S$ ausgeblasen und filtriert. Man erhält 181,5 g toluolhaltige Rohsäure mit einem Gehalt von 75,6%. Die Ausbeute an 0,0-Dimethyldithiophosphorsäure beträgt 87,2%, bezogen auf das umgesetzte Phosphorpentasulfid.

Phosphorpentasulfid-Rückstand: 0,65 g (0,6%).

Beispiel 12
(Vergleichsbeispiel mit Harnstoff als Katalysator)

Man verfährt wie in Beispiel 11, jedoch wird vor der Umsetzung im Methanol 0,6 g Harnstoff gelöst. Man erhält 179 g toluolhaltige Rohsäure mit einem Gehalt von 76,3%. Die Ausbeute an 0,0-Dimethyldithiophosphorsäure beträgt 88,3%, bezogen auf das umgesetzte Phosphorpentasulfid.

Phosphorpentasulfid-Rückstand: 2,5 g (2,3%).

Beispiel 13
(Vergleichsbeispiel mit Ammoniak als Katalysator)

Man verfährt wie in Beispiel 11, jedoch wird vor der Umsetzung im Methanol 2 mg $NH_3$ gelöst. Man erhält 168 g toluolhaltige Rohsäure mit einem Gehalt von 70,2%. Die Ausbeute an 0,0-Dimethyldithiophosphorsäure beträgt 78,1%, bezogen auf das umgesetzte Phosphorpentasulfid.

Phosphorpentasulfid-Rückstand: 5,0 g (4,5%).

Beispiel 14 (erfindungsgemäss)

Man verfährt wie in Beispiel 11, jedoch wird vor der Umsetzung im Methanol 0,17 g $(C_4H_9)_4$ PBr gelöst. Man erhält 184 g toluolhaltige Rohsäure mit einem Gehalt von 81,8%. Die Ausbeute an 0,0-Dimethyldithiophosphorsäure beträgt 95,6%, bezogen auf das umgesetzte Phosphorpentasulfid.

Phosphorpentasulfid-Rückstand: 0,6 g (0,5%).

Ausbeutesteigerung gegenüber
Beispiel 11: 8,4%
Beispiel 12: 7,3%
Beispiel 13: 17,5%

Beispiel 15 (Vergleichsbeispiel, Alkyl-Arylester)

Zu einer Aufschlämmung von 111 g Phosphorpentasulfid in 35 ml Toluol wird innerhalb von 1 h bei 90°C ein Gemisch von 94 g Phenol und 130 g n-Octanol getropft. Nach einer Nachreaktionszeit von 15 Minuten wird auf Raumtemperatur abgekühlt, mit einem Stickstoffstrom restliches $H_2S$ ausgeblasen und filtriert.

Man erhält 264 g Rohsäure, die laut $^{31}P$-NMR-Spektrum

94 Mol% 0,0-Di-n-octyldithiophosphorsäure,
6 Mol% 0,0-Diphenyldithiophosphorsäure und
0 Mol% 0-n-Octyl-0-phenyldithiophosphorsäure

enthält. Die Säurezahl (mg KOH/1 g Substanz) beträgt 71 (theoretisch bei vollständiger Umsetzung: 161).

Phosphorpentasulfid-Rückstand: 66,0 g (59,5%).

Beispiel 16 (erfindungsgemäss)

Man verfährt wie in Beispiel 15, jedoch wird vor der Umsetzung im n-Octanol-Phenol-Gemisch 0,56 g Ethyltrioctylphosphoniumbromid gelöst. Man erhält 344 g Rohsäure, die laut $^{31}P$-NMR-Spektrum

25 Mol% 0,0-Di-n-octyldithiophosphorsäure,
25 Mol% 0,0-Diphenyldithiophosphorsäure und
50 Mol% 0-n-Octyl-0-phenyldithiophosphorsäure

enthält. Die Säurezahl (mg KOH/1 g Substanz) beträgt 156 (theoretisch bei vollständiger Umsetzung: 161).

Phosphorpentasulfid-Rückstand: 0,5 g (0,5%).

**Patentansprüche**

1. Verfahren zur Umsetzung von Alkoholen und/oder Phenolen mit Phosphorpentasulfid in Gegenwart von Katalysatoren, dadurch gekennzeichnet, dass man als Katalysatoren

a) Phosphoniumsalze der allgemeinen Formel

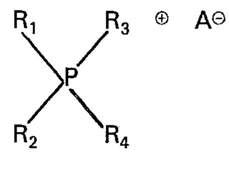

(I) oder

b) Ammoniumsalze der allgemeinen Formel

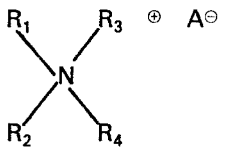

(II) oder

c) Phosphinoxide der allgemeinen Formel

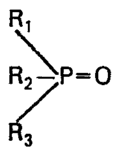

(III) oder

d) Phosphinsulfide der allgemeinen Formel

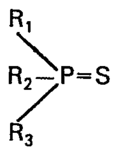

(IV) oder

e) Phosphinsäurederivate der allgemeinen Formel

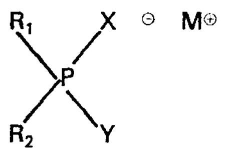

(V) einsetzt,

wobei in den allgemeinen Formeln I-V $R_1$, $R_2$, $R_3$ und $R_4$ gleiche oder verschiedene Alkyl-, Aryl-, Alkaryl- oder Aralkylreste mit 1 bis 22 Kohlenstoffatomen bedeuten, A einen Rest einer anorganischen oder organischen Säure darstellt und X sowie Y sowohl für Sauerstoff als auch Schwefel und M für ein einwertiges Metall oder Wasserstoff steht.

2. Verfahren nach Anspruch 1, dadurch gekennzeichnet, dass man Katalysatoren der allgemeinen Formeln I-V einsetzt, in denen $R_1$, $R_2$, $R_3$ und $R_4$ gleiche oder ungleiche Alkylreste mit 1 bis 12 Kohlenstoffatomen bedeuten.

3. Verfahren nach Anspruch 1 oder 2, dadurch gekennzeichnet, dass man Katalysatoren der allgemeinen Formeln I oder II einsetzt, in denen A einen Säurerest einer Halogenwasserstoffsäure, der Schwefelsäure, Salpetersäure, Essigsäure oder Dialkyldithiophosphorsäure, darstellt.

4. Verfahren nach einem der Ansprüche 1 bis 3, dadurch gekennzeichnet, dass man die Katalysatoren in Mengen von 0,001 bis 5 Gew%, bezogen auf den Alkohol oder das Phenol einsetzt.

**Claims**

1. Process for reacting alcohols and/or phenols with phosphorus pentasulfide in the presence of a catalyst, which comprises using as catalysts,

a) phosphonium salts of the general formula

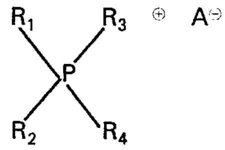

(I) or

b) ammonium salts of the general formula

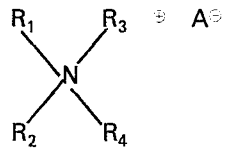

(II) or

c) phosphine oxides of the general formula

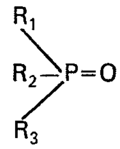

(III) or

d) phosphine sulfides of the general formula

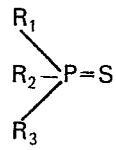

(IV) or

e) phosphinic acid derivatives of the general formula

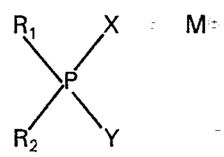

V

in which formulae I through V the substituents $R_1$, $R_2$, $R_3$ and $R_4$ stand for identical or different alkyl-, aryl-, alkaryl- or aralkyl-radicals having from 1 to 22 carbon atoms, A stands for an inorganic or organic acid, and X and Y stand for oxygen or sulfur, and M stands for a monovalent metal or hydrogen.

2. Process as claimed in claim 1, wherein catalysts of general formulae I through V are used, in which $R_1$, $R_2$, $R_3$ and $R_4$ stand for identical or different alkyl radicals having from 1 to 12 carbon atoms.

3. Process as claimed in claim 1 or 2, wherein catalysts of general formulae I or II are used, in which A stands for an acid radical of a hydrohalic acid, sulfuric acid, nitric acid, acetic acid or dialkyldithiophosphoric acid.

4. Process as claimed in any of claims 1 to 3, wherein the catalysts are used in proportions of 0.001 to 5 weight%, based on the alcohol or phenol.

**Revendications**

1. Procédé pour la réaction d'alcools et/ou de

phénols avec le pentasulfure de phosphore en présence de catalyseurs, caractérisé en ce que l'on utilise comme catalyseurs

a) des sels de phosphonium de formule générale

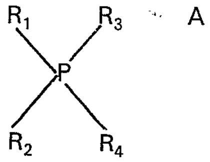

(I) ou

b) des sels d'ammonium de formule générale

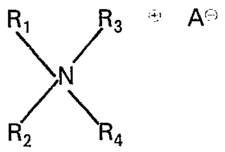

(II) ou

c) des oxydes de phosphines de formule générale

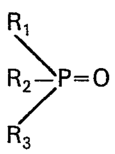

(III) ou

d) des sulfures de phosphines de formule générale

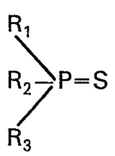

(IV) ou

e) des dérivés d'acide phosphinique de formule générale

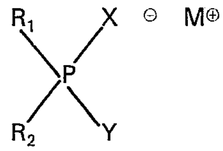

(V)

dans lesquels, dans les formules générales I–V, les symboles $R_1$, $R_2$, $R_3$ et $R_4$ représentent des restes alkyle, aryle, alkylaryle ou arylalkyle identiques ou différents en $C_1$-$C_{22}$, A représente un reste d'un acide inorganique ou organique et X et Y représentent l'oxygène ou le soufre et M représente un métal monovolant ou l'hydrogène.

2. Procédé selon la revendication 1, caractérisé en ce que l'on utilise des catalyseurs de formules générales I–V dans lesquelles $R_1$, $R_2$, $R_3$ et $R_4$ représentent des restes alkyle identiques ou différents en $C_1$-$C_{12}$.

3. Procédé selon la revendication 1 ou 2, caractérisé en ce que l'on utilise les catalyseurs de formule générale I ou II dans les quelles A représente un reste d'un acide halohydrique, de l'acide sulfurique, nitrique, acétique ou d'un acide dialkyldithiophosphorique.

4. Procédé selon l'une des revendications 1 à 3, caractérisé en ce que l'on utilise les catalyseurs en quantités de 0,001 à 5% en poids, par rapport à l'alcool ou au phénol.